# EUROPÄISCHE PATENTANMELDUNG

(11) **EP 4 401 260 A1**
(43) Veröffentlichungstag der Anmeldung: **17.07.2024**
(21) Anmeldenummer: 23151558.6
(22) Anmeldetag: 13.01.2023
(51) Int. Cl.: H02J 3/00, H02J 13/00

(54) **VERFAHREN ZUR STEUERUNG EINES ELEKTRISCHEN ENERGIEVERTEILUNGSNETZES, KONTROLLANORDNUNG UND COMUTERPROGRAMMPRODUKT**

(71) Anmelder: Siemens Aktiengesellschaft, 80333 München (DE)
(72) Erfinder: METZGER, Michael, 85570 Markt Schwaben (DE); HEUER, Christian, 21220 Seevetal (DE); PLATZ, Axel, 81479 München (DE); EINFALT, Alfred, 1210 Wien (AT)
(74) Vertreter: Siemens Patent Attorneys

(57) **Zusammenfassung**

Gegenstand der vorliegenden Erfindung ist ein Verfahren zur Steuerung eines elektrischen Energieverteilungsnetzes, mit den Schritten:
- bereitstellen eines geographischen Modelldatensatzes eines Teilnetzes des elektrischen Energieverteilungsnetzes, und
- bereitstellen eines stromkreisbasierten Modelldatensatzes des Teilnetzes,
dadurch gekennzeichnet, dass
mittels einer Zuordnungseinrichtung der geographische Modelldatensatz und der stromkreisbasierte Modelldatensatz räumlich zueinander orientiert werden, und dass mittels einer Repräsentationseinrichtung anhand der räumlich zueinander orientierten Modelldatensätze ein kombinierter Modelldatensatz erzeugt wird, wobei Leitungen und Betriebsmittel in einem geographischen Fokusbereich einer Hintergrundkarte überlagert und in einem Peripheriebereich anhand schematischer Ersatzschaltbilder beschrieben sind, und dass
mittels einer Anzeigeeinrichtung der kombinierte Modelldatensatz angezeigt wird, wobei Statusmeldungen über den Betriebszustand des Energieverteilungsnetzes im Fokusbereich eingeblendet werden.

Ferner sind Gegenstände der vorliegenden Erfindung eine entsprechende Kontrollanordnung und ein Computerprogrammprodukt.

## Beschreibung

Die Erfindung betrifft ein Verfahren zur Steuerung eines elektrischen Energieverteilungsnetzes, eine Kontrollanordnung gemäß dem Oberbegriff des Anspruchs 7 und ein Comuterprogrammprodukt gemäß Anspruch 13.

Aus der Produktbroschüre "Intelligent control center technology - Spectrum Power", Siemens AG 2017, Article-No. EMDG-B90019-00-7600, ist eine Software für ein sog. "Supervisory Control and Data Acquisition (SCADA)" System, also eine Leitstelle, bekannt. SCADA Systeme sind zur Kontrolle und Steuerung von Energienetzen lange bekannt (Wikipedia permananter link:
https://en.wikipedia.org/w/index.php?title=SCADA&oldid=858433 181). Dabei werden Messwerte von Sensoren, beispielsweise von Spannungsmessgeräten und Strommessgeräten im Energienetz, aggregiert und zur Leitstelle übermittelt und dort für das Bedienpersonal auf Bildschirmen dargestellt. Insbesondere werden Alarmnachrichten angezeigt.

Zur Steuerung von Leistungsschaltern und Trennschaltern im Energienetz sowie zur Ansteuerung von Energieerzeugern wie Kraftwerken werden Steuerbefehle ins Energienetz gesendet. Diese Steuerbefehle werden von "Remote Terminal Units" (RTUs), "programmable logic controllers" (PLCs) und "inteligent devices" (IEDs) empfangen und verarbeitet, um die Leistungsschalter und die Trennschalter usw. anzusteuern. In der Leitstelle ist bisher häufig ein lokales Rechenzentrum vorgesehen, auf dem die Leitstellensoftware wie z.B. Sprectrum Power läuft. Es werden rund um die Uhr Techniker in der Leitstelle bereitgehalten, die die Anzeigen des SCADA über den aktuellen Betriebszustand des Energienetzes kontrollieren und im Fehlerfall Gegenmaßnahmen wie z.B. die Abschaltung eines Netzabschnitts durchführen können. Die Leitstellensoftware wird in der Regel in einer zentralen Rechneranordnung betrieben, die beispielsweise als ein Rechenzentrum mit Prozessoren, Datenspeichern und Bildschirmen ausgebildet sein kann. Der Begriff "zentral" zielt dabei darauf ab, dass alle Messdaten aus dem Energienetz und alle Steuerbefehle für das Energienetz zentral verarbeitet werden.

Auch eine teilweise oder vollständige Ausbildung der RechnerAnordnung bzw. der Leitstellensoftware als eine Cloud-Applikation, also eine Serveranordnung mit dezentral verteilten Ressourcen zur Datenverarbeitung und Datenspeicherung, die über ein Datennetzwerk wie z.B. das Internet verbunden sind, kann vorgenommen werden. Dieser Ansatz ist derzeit noch nicht weit verbreitet, bietet aber gerade bei einer Integration der unteren Spannungsebenen des Netzes mit ihrer Vielzahl von Datenpunkten Vorteile.

Als Begleiterscheinung einer immer weiteren Verbreitung von verteilter Energieerzeugung, also beispielsweise durch Photovoltaik-Anlagen oder Windkraftanlagen, wird durch die immer zahlreicheren lokalen Energieerzeuger, die in das Nieder- und Mittelspannungsnetz einspeisen, eine Vorhersage eines Systemzustands des Energienetzes erschwert. Auch die Abhängigkeit von Wettereinflüssen steigt, weil z.B. Solarzellen stark von der Bewölkung und Windkraftanlagen von der Windstärke beeinflusst werden. Diese Probleme wirken sind besonders stark auf der Niederspannungsebene und der Mittelspannungsebene aus. Sie wirken auch auf die nächsthöhere Spannungsebene eines Energieübertragungsnetzes der Hochspannungsebene zurück, das hierdurch schwieriger zu steuern und vorherzusagen ist.

Bisher werden in der Regel Last- und Erzeugungsprognosen und/oder Fahrpläne in Verbindung mit einem sog. "Distribution System Power Flow (DSPF)" eingesetzt, um einen zukünftigen Netzzustand abzuschätzen. Dabei verwendet DSPF statische Betriebsmitteldaten, lokale Vorhersage für einen Energieverbrauch und eine Energieerzeugung sowie dynamische Topologie-Informationen (d.h. welche Leitungen zwischen den einzelnen Komponenten aktuell geschaltet sind), um einen prognostizierten Spannungsbetrag und Spannungswinkel an jedem Netzwerkabschnitt zu berechnen. Ein solcher Ansatz ist beispielsweise aus der Produktbroschüre "Spectrum Power Aktives Netzwerkmanagement", Siemens AG 2016, EMFG-B10104-00, bekannt. Die technischen Grundlagen sind aus den Veröffentlichungen "Real-Time Distribution System State Estimation" von Dzafic et al., 2010 IEEE 978-l-4244-7398-4 und "Real-Time Estimation of Loads in Radial and Unsymmetrical Three-Phase Distribution Networks" von Dzafic et al., 2013 IEE 0885-8950, bekannt.

Derzeit messen Verteilnetzbetreiber im Schnitt ca. 20% der Verteilnetzknoten. Der Rest des Verteilnetzes ist unbeobachtet. Im Niederspannungsbereich werden vermehrt Smart Meter eingesetzt, sie werden jedoch nicht wie die in Leitstellen empfangenen Messwerte in Echtzeit bereitgestellt, sondern treffen mehrere Stunden nach der Messung ein. Sie werden daher eher für Planungszwecke verwendet.

Mit der zunehmenden Durchdringung der Stromverteilungsnetze mit Elektromobilität, Stromspeichern und verteilter Erzeugung mittels Windkraftanlagen und Photovoltaikanlagen wird die sog. "letzte Meile" des Netzes entscheidend für den Netzbetrieb. Durch die vielen Netzanschlusspunkte und Betriebsmittel in den unteren Spannungsebenen hat es der Netzbetreiber mit einer sehr großen Zahl von Ereignissen und Zustandsinformationen zu tun, die die Grundlage für seine Entscheidungen bilden. Um eine effiziente Bearbeitung durch das Bedienpersonal zu gewährleisten ist eine flexible Aggregierung auf unterschiedlichen Detaillierungsgraden der Ereignisse und Zustandsinformationen nötig. Für die Interpretation der Informationen auf einer spezifischen Zoomstufe ist oft der Kontext aus der darüber bzw. darunter liegenden Zoomstufe notwendig.

Hinzu kommt, dass unterschiedliche Darstellungsformen des Stromverteilungsnetzes für die unterschiedlichen Aufgabenstellungen im Verteilnetzbetrieb verwendet werden. Um auf Basis der physikalischen Auslastung des Netzes z.B. Umschaltungen eines Teilnetzes auf eine andere Substation zu planen und durchzuführen, ist eine elektrotechnische Sichtweise in Form von schematischen Netzplänen erforderlich.

Um Störungen im Netz beheben zu können und die Netztechniker vor Ort effizient anweisen zu können, ist dagegen ggf. eine geografische Sichtweise mit Zufahrtsmöglichkeiten etc. notwendig. Der Netztechniker vor Ort im Niederspannungsnetz, der z.B. eine temporäre Baustromversorgung an eine geeignete Station anschließen muss, benötigt z.B. Auskunft über die Verlegung der Kabel und braucht wiederrum eine andere Darstellungsform.

Jede der genannten Datenrepräsentationen enthalten viele zusätzliche, teils dynamische Elemente, die die Entscheidungsfindung erschweren. Das Bedienpersonal wird daher vor enorme geistige Herausforderungen gestellt, um die unterschiedlichen Datenauswertungen und Darstellungen zueinander in Kontext zu setzen und richtige Entscheidungen zu treffen.

In heutigen Systemen werden die Ereignisse und Systemzustände in Alarmlisten oder auf schematischen, in Form eines sogenannte "Single Line Diagrams" (SDL) (auch schematischer Netzplan genannt) oder geographischen Darstellungen des Netzes dem Bedienpersonal angezeigt. Hierin werden Alarme beispielsweise mittels blinkender Symbole angezeigt.

Für jeden Anwendungsfall wird nun je nach Verfügbarkeit von entsprechenden Lösungen (SCADA, GIS, Asset Management System, Outage Management System,...) eine Darstellungsform verwendet und für jede Netzebene gibt es jeweils ein Diagramm. Das Bedienpersonal muss sich den nicht dargestellten, aber für die Interpretation notwendigen, Kontext dazu denken.

Diese Vorgangsweise in Verbindung mit dem qualitativ hohen Trainingslevel der Operatoren ist für Hoch- und nicht allzu hoch automatisierte Mittelspannungsnetze noch ausreichend. Am Beispiel eines Stadtnetzbetreibers einer mitteleuropäischen Großstadt mit ca. 2 Mio. Einwohnern werden so ein Hochspannungsnetz mit z.B. 50 Umspannwerken (110kV/20kV - automatisiert) und das darunter liegende Mittelspannungsnetz (Automatisierungsgrad der 20kV / 0,4kV Transformatorstationen liegt z.B. bei unter 10% bei 12.000 Ortsnetztransformator-Stationen) betrieben. Steigt nun der Automatisierungsgrad stark an, so potenziert sich die Anzahl der Anlagen, die zahlreiche Meldungen, Alarme und Messwerte bereitstellen. Damit wird die Aufgabe des Bedienpersonals zunehmend komplexer.

Ausgehend von bekannten Verfahren zur Steuerung eines elektrischen Energieverteilungsnetzes stellt sich an die Erfindung die Aufgabe, ein Verfahren anzugeben, mit dem vergleichsweise einfach, schnell und zuverlässig der Zustand eines elektrischen Energieverteilnetzes überwacht werden kann.

Die Erfindung löst diese Aufgabe durch ein Verfahren nach Anspruch 1.

Eine Einrichtung im Sinne der Erfindung weist beispielsweise Prozessoren, Datenspeicher und Bildschirme auf. Einrichtungen sind z.B. Computer wie z.B. Server, die Datenprozessorressourcen und Datenspeicherressourcen aufweisen und Daten mit anderen Computern austauschen können. Es kann sich auch um Softwaremodule handeln, die auf einer Cloud-Infrastruktur ausgeführt werden, d.h. einer räumlich verteilten Server- und Datenbankarchitektur.

Messeinrichtungen können beispielsweise Spannungsmessgeräte, Strommessgeräte, Phasenmessgeräte bzw. "Phasor measurement units (PMUs)", "Remote Terminal Units" oder Intelligente Stromzähler bzw. "Smart Meter", "Intelligent electronic devices (IEDs)" zur Überwachung von Schaltern und anderen Betriebsmitteln, Steuereinrichtungen z.B. für Intelligente Substations oder Schutzgeräte sein, die an den Messorten eingesetzt werden. Die Datenübertragung der Messdaten kann dabei z.B. nach dem IEC 61850 Protokoll oder nach dem Internet-Protokoll (z.B. WEB-basierte Protokolle wie MQTT oder REST) erfolgen. Es können per Powerline-Communication über das Stromnetz, oder per Funk z.B. per LTE (4G) oder per Kabel wie z.B. Ethernet oder Lichtwellenleiter Daten übertragen werden. Die Messeinrichtungen liefern Messwerte, die für eine Zustandsschätzung des aktuellen Betriebszustands ausgewertet werden können. Wenn der aktuelle Betriebszustand, also z.B. eine ermittelte Spannung an einem bestimmten Ortsnetztransformator, als unzulässig erkannt wird (z.B. eine zu hohe Spannung), dann wird eine Alarmmeldung für das Bedienpersonal ausgegeben.

Ein geographischer Modelldatensatz eines Teilnetzes des elektrischen Energieverteilungsnetzes im Sinne der Erfindung ist z.B. eine digitale Karte, die ein Gebiet wie eine Stadt, ein Dorf, einen Landkreis oder ein Bundesland zeigt. Es kann sich um eine maßstabsgetreue schematische Karte handeln, bevorzugt jedoch um ein Luftbild oder ein Satellitenbild.

Ein stromkreisbasierter Modelldatensatz weist z.B. eine Beschreibung der Topologie, d.h. der Verschaltung von Betriebsmitteln wie Schalteinrichtungen, Transformatoren, Verbrauchern bzw. Lasten, Erzeugern elektrischer Energie usw. sowie Leitungen einschließlich der Betriebsparameter der Betriebsmittel auf. Beispielsweise enthält er Informationen über die räumliche Anordnung von Knotenpunkten, Schalteinrichtungen und Messsorten und/oder den Parametern der Betriebsmittel. Ein für den Datenaustausch gebräuchliches Informationsmodell definiert der CIM Standard (IEC 61970, IEC 61968) mit der Umsetzung in einem XML-RDF Datenformat. Verteilnetze werden innerhalb eines Betreibers häufig im Rahmen eines Geoinformationssystems (GIS) digital abgebildet, das heißt über sogenannte Shape Files und relationale Tabellen. Da GIS-Systeme sich in der Regel durch Herstellerspezifische Datenmodelle auszeichnen, ist eine Datenvorbereitung notwendig. Diese Datenvorbereitung konvertiert in ein geeignetes Datenformat für die eingesetzten Graphenalgorithmen, beispielweise eine Graphdatenbank wie "neo4j".

Eine räumliche Orientierung der Modelldatensätze bedeutet i.d.R. mehr als ein reines Übereinanderlegen, drehen und Anpassen des Maßstabs eines oder beider Modelle. Vielmehr sollte für Leitungen und Betriebsmittel jeweils der geographische Ort in beiden Modellen verwendet werden, um jedes Betriebsmittel im stromkreisbasierten Modelldatensatz eineindeutig einem Ort im geographischen Modelldatensatz zuzuordnen. In einer zweckmäßigen Ausführung liegen die Daten, wie oben erwähnt, in einer Graphdatenbank vor.

Ein kombinierter Modelldatensatz im Sinne der Erfindung ist eine neuartige Repräsentation der beiden Modelle, die jeweils Angaben über die elektrische Verschaltung (z.B. CIM Modell inkl. der dynamischen Schaltzustände von Trennern, Leistungschaltern, etc.) mit geographischen Kartenangaben (geographische Verortung mit Angabe von Längen- und Breitengrade für alle Elemente im elektrischen Modell) verbindet. Der kombinierte Modelldatensatz kann in einer graphischen Benutzeroberfläche dargestellt werden.

Ein Fokusbereich ist ein Bereich des kombinierten Modelldatensatzes, der z.B. rechteckig, rund oder vieleckig gestaltet ist. Mit dem Fokusbereich können z.B. Leitungen und Betriebsmittel als Symbole mit korrekter räumlicher Orientierung (Länge und Ausrichtung einer Leitung, Ort eines Transformators) in ein Satellitenbild einer Stadt hineingezeichnet werden.

Im Gegensatz dazu wird im Peripheriebereich lediglich ein (oder mehrere) schematische Ersatzschaltbild ausgebildet, der z.B. den Fokusbereich umgibt oder neben diesem angeordnet ist. Dies ist ein wesentlicher Vorteil der Erfindung, weil die Aufmerksamkeit eines Nutzes auf den Fokusbereich gelenkt wird, in dem detaillierte Ansichten präsentiert werden, während der Peripheriebereich den Kontext der elektrischen Verschaltung der detaillierten Ansichten schematisch verdeutlicht.

Eine Anzeigeeinrichtung weist z.B. einen Bildschirm oder eine einen Projektor mit Leinwand auf. Es sollte i.d.R. bevorzugt ein Bildschirm mit hoher Auflösung, mindestens VGA, bevorzugt HD, noch mehr bevorzugt UHD eingesetzt werden, um auch kleine Details gut erkennbar wiederzugeben.

Statusmeldungen über den anhand aktueller elektrischer Messwerte, die von Messeinrichtungen übermittelt wurden, geschätzten Netzzustand des Energieverteilungsnetzes weisen z.B. Informationen über Spannungen, Ströme, Schaltzustände auf. Insbesondere können die Statusmeldungen Warnmeldungen aufweisen, wenn unzulässige Betriebsparameter durch eine Zustandsschätzung oder durch direkte Messung ermittelt wurden. Die Schaltzustände sind beispielsweise ein offener oder ein geschlossener Zustand einer Schalteinrichtung. Es kann sich auch um eine Stufenstellung eines Transformators handeln.

In traditionellen graphischen Benutzeroberflächen ist jeweils nur eine Darstellungsform - geographisch oder elektrisch - gewählt. Die Benutzer müssen die Kontextbeziehungen selbst herstellen. Die Erfindung dagegen erlaubt eine kombinierte und dadurch sehr kompakte Darstellung von geographischer Lageinformation und elektrischem Kontext.

Die Erfindung ermöglicht es, den geographischen und elektrischen Kontext einer spezifisch gewählten Netzebene bzw. eines Teilnetzes mit dem elektrischen Kontext der anschließenden bzw. über- oder untergeordneten Netzbereiche gemeinsam darzustellen:
- Das aktuell fokussierte Teilnetz wird in geographischer Darstellung der Netzelemente vor einer Hintergrundkarte des umgebenen Gebietes, z.B. eines oder mehrere Straßenzüge bzw. Stadtviertel, dargestellt.
- Der elektrische Kontext wird über eine schematische Fortführung der Leitungen ausgehend von der geographischen Darstellung im Fokusbereich zu den umgebenden Netzabschnitten im Peripheriebereich hergestellt. Die schematische Darstellung bietet die Freiheit, die für das Verständnis nötige Informationen im verfügbaren Raum der Benutzerschnittstelle unterzubringen.
- Über die direkt anschließenden Netzgebiete des fokussierten Teilnetzes hinausgehende Netzebenen (sowohl nach oben, als auch nach unten) können über Ersatzschaltbilder im Peripheriebereich dargestellt werden.

Für die praktische Umsetzung der eingangs erläuterten Darstellung ist der Einsatz von Layout-Algorithmen für mathematische Graphen notwendig. Hier existiert eine breite Bibliothek an Verfahren, beispielsweise Hierarchisches Zeichnen, Ausrichtung am längsten Pfad, kräftebasiertes Zeichnen, Skizzenbasiertes Zeichnen oder Spektral-Layout, die es ermöglichen, automatisch beispielsweise eine Ringstruktur für ein Ersatzschaltbild im Peripheriebereich so zu wählen, dass eine für menschliche Betrachter leicht verständliche Anordnung der Betriebsmittel in der Darstellung gewährleistet wird. Die vorhandenen Algorithmen können dabei mittels Domänen-spezifischen Regeln für die Darstellung von singleline-diagramms parametriert werden. Zu dem generischen Ansatz für das Graphen-Layout wird die Stromkreissicht ergänzt, d.h. die Hierarchie der Stromkreise im Netz berücksichtigt und beispielsweise ein Netzbetriebsmittel mit dem direkt anschließenden Stromkreis geographisch korrekt dargestellt, die höheren Netzebenen schematisch dargestellt, sowie die ggf. unterlagerten Netzebenen zu einem Symbol aggregiert.

Des Weiteren kann die Layout-Berechnung der Schaltbilder so parametriert werden, dass die relative Lage der schematischen Netzabbilder, wie beispielsweise die Himmelsrichtungen, richtig wieder gegeben wird - ähnlich wie es in den schematischen Verkehrsplänen im öffentlichen Nahverkehr umgesetzt wird.

Verteilnetze sind hierarchisch nach Spannungsebene aufgebaut und werden überwiegend radial betrieben, d.h. mit einer Schalterstellung, die in einer Baumstruktur der Netztopologie resultiert. Auch wenn es zeitweise zu einem vermaschten Betrieb von Mittelspannungs- oder Niederspannungs-Netzen kommt, haben die zugehörigen mathematischen Graphen nur vereinzelte Kreise. Die Netztopologie kann unter Ausnutzung dieser Struktur in eine Baumstruktur von Blöcken (Zweifach-Zusammenhangskomponenten des Graphen, hier Kreise) zerlegt werden. Damit ist es möglich, die Netzebenen zusammen mit heute verfügbaren Layout-Algorithmen - verfügbar über Softwarebibliotheken, wie beispielsweise graphviz, igraph, oder tulip - zu nutzen und von den elektrischen Schnittstellen der Fokusregion kreisförmige, hierarchisch geschachtelte Graphen-Layouts zur erzeugen. Diese Graphen-Layouts bilden den elektrischen Kontext der *Fokusregion,* d.h. den geographisch korrekt in einem Kartenausschnitt dargestellten Netzabschnitt aus. Wie oben ausgeführt startet der Aufbau der graphischen Darstellung mit dem Netzbetriebsmittel bzw. dem Stromkreis, der für den aktuellen Bearbeitungsfall von Interesse ist, aggregiert unterlagerte Netzebenen bei Bedarf, stellt diesen geographisch dar und ergänzt die überlagerten Stromkreise schematisch in der graphischen Oberfläche.

Die Grundidee der Hierarchisierung im schematisch dargestellten *elektrischen Kontext* ist, rekursiv jede relevante Netzebene z.B. auf einem konzentrischen Kreis um die Fokusregion abzubilden. Die Reihenfolge der konzentrischen Kreise von innen nach außen ergibt sich aus der Abfolge der Netzebenen ausgehend von den elektrischen Koppelpunkten der Fokusregion in Richtung der nächsthöheren Spannungsebenen Der schematische Kontext kann je nach Erfordernissen der graphischen Darstellung tatsächlich unter Verwendung von Kreisen, oder aber durch topologisch äquivalente Formen, wie z.B. Rechtecke, Hexagone oder Ovale, erfolgen.

Netzabschnitte, die elektrisch parallel zu dem Netz der Fokusregion ohne direkte Verknüpfung, d.h. indirekt über die vorgelagerte Netzebene verknüpft, werden nicht detailliert, sondern aggregiert als Kanten des Graphens dargestellt. Ein solcher Knoten kann beispielweise über ein geeignetes Symbol (versorgender Transformator oder übliches Netzsymbol) im elektrischen Kontext charakterisiert werden.

Die Aggregation als Symbol eignet sich analog zum obigen Vorgehen für die Repräsentation des elektrischen Kontextes des Fokusbereichs nach unten, d.h. für elektrische Ebenen bzw. Details, die in der Fokusregion für die gewählte ZoomStufe nicht dargestellt werden sollen: Soll in der Fokusregion beispielweise ein Niederspannungsstrang dargestellt werden, wird in der Regel die Elektrik in einem Gebäude oder einen Kabelverteilerkasten aggregiert über ein spezifisches Symbol dargestellt.

Des Weiteren kann die Layout-Berechnung der Schaltbilder so parametriert werden, dass die relative Lage der schematischen Netzabbilder, wie beispielsweise die Himmelsrichtungen, richtig wieder gegeben wird. Beispielsweise wird in der Veröffentlichung "Metro Maps on Octilinear Grid" von Hannah Bast and Patrick Brosi and Sabine Storandt, Graphs Computer Graphics Forum, vol 39 (2020), ein Verfahren für eine Planung von schematischen Verkehrsplänen im öffentlichen Nahverkehr beschrieben. Die Erhaltung der relativen Lage mit dem schematischen Teil wird zum einen über den oben beschriebenen rekursiven Aufbau des Layouts ausgehend von den Schnittstellen in der geographischen Karte der Fokusregion begünstigt, zum anderen können kraftbasierte Layout-Algorithmen genutzt werden, die die Abweichung von der Himmelsrichtung auf den konzentrischen Kreisen minimieren. In diesem Zusammenhang kann auch der Ansatz von Bast et al. mit Vorteil eingesetzt werden.

In einer bevorzugten Ausführungsform des erfindungsgemäßen Verfahrens wird für das elektrische Energieverteilungsnetz ein Mittelspannungsnetz mit einer Nennspannung von 1 kV bis 52 kV verwendet.

In einer weiteren bevorzugten Ausführungsform des erfindungsgemäßen Verfahrens wird für das elektrische Energieverteilungsnetz ein Niederspannungsnetz mit einer Nennspannung von höchstens 1 kV verwendet wird. Auch für Niederspannungsnetze können mittlerweile ausreichend genaue Topologieinformationen bereitgestellt werden.

In einer weiteren bevorzugten Ausführungsform des erfindungsgemäßen Verfahrens werden mittels einer Alarmeinrichtung anhand des kombinierten Modelldatensatzes Alarmmeldungen ausgegeben.

In einer weiteren bevorzugten Ausführungsform des erfindungsgemäßen Verfahrens werden mittels einer Steuereinrichtung anhand der Alarmmeldungen Steuerbefehle für elektrische Betriebsmittel erstellt. Die Steuerbefehle werden dann per Datenkommunikation an steuerbare Betriebsmittel im Energieverteilungsnetz wie z.B. regelbare Transformatoren, Netzregler, Schalteinrichtungen, steuerbare Lasten und steuerbare Erzeuger elektrischer Energie übermittelt. Die Steuerbefehle können automatisiert mittels einer Simulation, ausgehend vom aktuellen Netzzustand, erstellt werden. Auch eine manuelle Erstellung von Steuerbefehlen durch das Bedienpersonal ist möglich.

In einer weiteren bevorzugten Ausführungsform des erfindungsgemäßen Verfahrens wird für die Hintergrundkarte Informationen über mindestens eines der folgenden geographischen Merkmale verwendet: Straßen, Häuser, Bahnlinien, Flüsse, Meere, Berge, Täler.

In einer weiteren bevorzugten Ausführungsform des erfindungsgemäßen Verfahrens werden für die Ersatzschaltbilder Informationen über mindestens eines der folgenden Betriebsmittel verwendet: Ortsnetztransformator, regelbarer Ortsnetztransformator, Netzregler, Mittelspannungstransformator, Hochspannungstransformator, Schaltanlage.

In einer weiteren bevorzugten Ausführungsform des erfindungsgemäßen Verfahrens werden für die Statusmeldungen Alarmmeldungen über unzulässige Betriebszustände verwendet.

Ausgehend von bekannten Kontrollanordnungen zur Steuerung eines elektrischen Energieverteilungsnetzes stellt sich ferner an die Erfindung die Aufgabe, eine Kontrollanordnung anzugeben, mit der vergleichsweise einfach, schnell und zuverlässig der Zustand eines elektrischen Energieverteilnetzes überwacht werden kann.

Die Erfindung löst diese Aufgabe durch eine Kontrollanordnung nach Anspruch 7. Bevorzugte Ausführungsformen sind in den Ansprüchen 8 bis 12 beschrieben. Es ergeben sich sinngemäß die gleichen Vorteile wie eingangs für das erfindungsgemäße Verfahren erläutert.

Ausgehend von bekannten Computerprogrammprodukten für eine Zustandsschätzung stellt sich ferner an die Erfindung die Aufgabe, ein Computerprogrammprodukt anzugeben, mit dem vergleichsweise einfach, schnell und zuverlässig der Zustand eines elektrischen Energieverteilnetzes überwacht werden kann.

Die Erfindung löst diese Aufgabe durch ein Computerprogrammprodukt nach Anspruch 13. Es ergeben sich sinngemäß die gleichen Vorteile wie eingangs für das erfindungsgemäße Verfahren erläutert.

Zur besseren Erläuterung der Erfindung zeigen in schematischer Darstellung die
- Figur 1: ein Beispiel für einen bisher üblichen stromkreisbasierten Modelldatensatz, und
- Figur 2: ein Beispiel für einen bisher üblichen geographischen Modelldatensatz, und
- Figur 3: einen erfindungsgemäßen kombinierten Modelldatensatz, und
- Figur 4: ein Beispiel für eine Erzeugung eines kombinierten Modelldatensatzes.

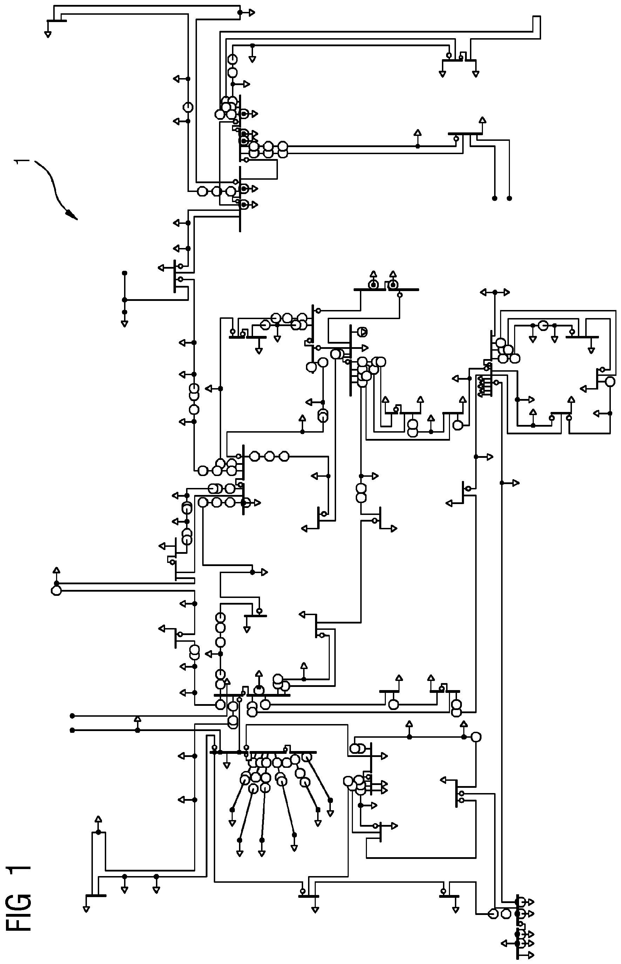

In der Figur 1 ist ein stromkreisbasierter Modelldatensatz 1 als sog. "single line diagram" eines elektrischen Energieverteilungsnetzes abgebildet. Es werden übliche Symbole zur Kennzeichnung von elektrischen Betriebsmitteln wie Transformatoren verwendet.

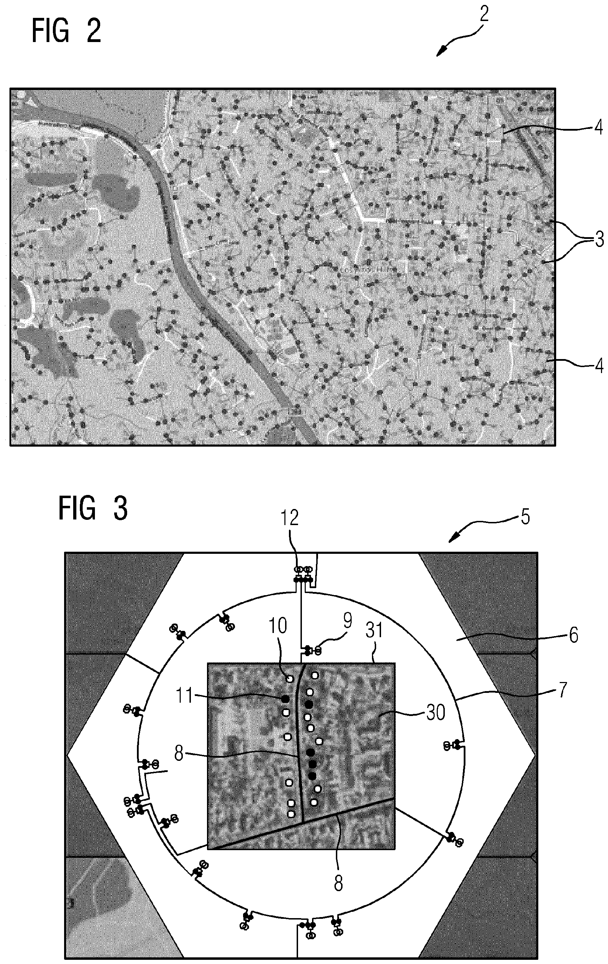

Die Figur 2 zeigt einen geographischen Modelldatensatz 2 als Karte aus einem Geoinformationssystem eines Netzbetreibers einer Stadt. Ortsnetztransformatoren 3 sind mittels elektrischer Leitungen 4 verbunden. Es sind eine Autobahn und mehrere Seen erkennbar. Dies erleichtert dem Bedienpersonal die räumliche Verortung, d.h. den geographischen Kontext, herzustellen.

Figur 3 zeigt eine Darstellung eines erfindungsgemäß erstellten kombinierten Modelldatensatzes 5, bei der ein Peripheriebereich 6 hexagonal ausgebildet ist. Ein übergeordnetes Mittelspannungsnetz 7 ist als Ringstruktur als Ersatzschaltbild eingefügt, wobei Transformatoren 9,12 erkennbar sind. Über drei radial nach innen zu einem Fokusbereich 31 laufenden Leitungen ist das Ersatzschaltbild mit dem Fokusbereich verbunden. Dieser zeigt in geographisch korrekter Ausrichtung Leitungen 8 und Ortsnetztransformatoren 10,11 vor dem Hintergrund eines Satellitenbildes 30.

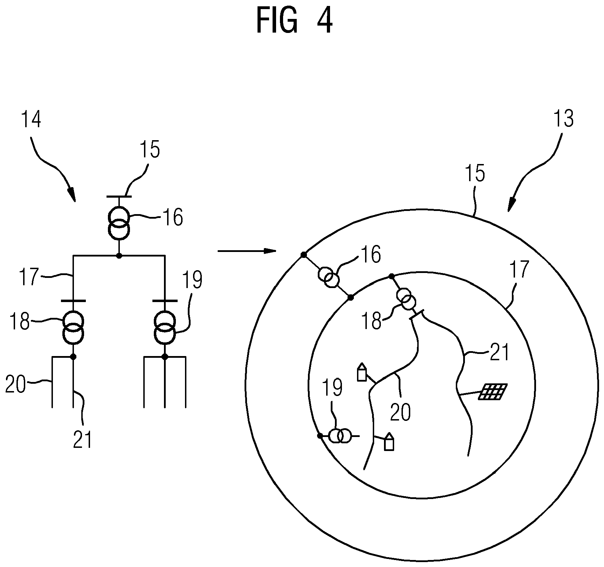

Figur 4 zeigt, wie ein hierarchisches Schaltbild 14 mit Hochspannungsnetz 15, Transformatoren 16,18,19, Mittelspannungsnetz 17, und Niederspannungsabzweigen 20,21 in eine ringförmige Struktur 13 überführt wird. In der ringförmigen Struktur 13 sind z.B. Häuser und Photovoltaikanlagen integriert.

## Patentansprüche

1. Verfahren zur Steuerung eines elektrischen Energieverteilungsnetzes, mit den Schritten:
- bereitstellen eines geographischen Modelldatensatzes (2) eines Teilnetzes des elektrischen Energieverteilungsnetzes (3,4) und
- bereitstellen eines stromkreisbasierten Modelldatensatzes (1) des Teilnetzes,
**dadurch gekennzeichnet, dass**
mittels einer Zuordnungseinrichtung der geographische Modelldatensatz (2) und der stromkreisbasierte Modelldatensatz (1) räumlich zueinander orientiert werden, und dass
mittels einer Repräsentationseinrichtung anhand der räumlich zueinander orientierten Modelldatensätze ein kombinierter Modelldatensatz (5) erzeugt wird, wobei Leitungen (8) und Betriebsmittel (10,11,12) in einem geographischen Fokusbereich (31) einer Hintergrundkarte (30) überlagert und in einem Peripheriebereich (6) anhand schematischer Ersatzschaltbilder (7,9,12) beschrieben sind, und dass mittels einer Anzeigeeinrichtung der kombinierte Modelldatensatz (5) angezeigt wird, wobei Statusmeldungen über den Betriebszustand des Energieverteilungsnetzes (7,8,9,10,11,12) im Fokusbereich eingeblendet werden.

2. Verfahren nach Anspruch 1, **dadurch gekennzeichnet, dass** für das elektrische Energieverteilungsnetz (3,4) ein Mittelspannungsnetz mit einer Nennspannung von 1 kV bis 52 kV verwendet wird.

3. Verfahren nach Anspruch 1 oder 2, **dadurch gekennzeichnet, dass** für das elektrische Energieverteilungsnetz (3,4) ein Niederspannungsnetz mit einer Nennspannung von höchstens 1 kV verwendet wird.

4. Verfahren nach einem der vorhergehenden Ansprüche, **dadurch gekennzeichnet, dass** für die Hintergrundkarte (30) Informationen über mindestens eines der folgenden geographischen Merkmale verwendet wird: Straßen, Häuser, Bahnlinien, Flüsse, Meere, Berge, Täler.

5. Verfahren nach einem der vorhergehenden Ansprüche, **dadurch gekennzeichnet, dass** für die Ersatzschaltbilder Informationen über mindestens eines der folgenden Betriebsmittel verwendet werden: Ortsnetztransformator, regelbarer Ortsnetztransformator, Netzregler, Mittelspannungstransformator (9,18,19), Hochspannungstransformator (12,16), Schaltanlage.

6. Verfahren nach einem der vorhergehenden Ansprüche, **dadurch gekennzeichnet, dass** für die Statusmeldungen Alarmmeldungen über unzulässige Betriebszustände verwendet werden.

7. Kontrollanordnung zur Steuerung eines elektrischen Energieverteilungsnetzes, aufweisend
eine erste Datenbank mit einem geographischen Modelldatensatz (2) eines Teilnetzes des elektrischen Energieverteilungsnetzes (3,4), und
eine zweite Datenbank mit einem stromkreisbasierten Modelldatensatz (1) des Teilnetzes,
**dadurch gekennzeichnet, dass**
eine Zuordnungseinrichtung ausgebildet ist, den geographischen Modelldatensatz (2) und den stromkreisbasierten Modelldatensatz (1) räumlich zueinander zu orientieren, und dass
eine Repräsentationseinrichtung ausgebildet ist, anhand der räumlich zueinander orientierten Modelldatensätze einen kombinierter Modelldatensatz (5) zu erzeugen, wobei Leitungen (8) und Betriebsmittel (10,11,12) in einem geographischen Fokusbereich (31) einer Hintergrundkarte (30) überlagert und in einem Peripheriebereich (6) anhand schematischer Ersatzschaltbilder (7,9,12) beschrieben sind, und dass eine Anzeigeeinrichtung ausgebildet ist, den kombinierte Modelldatensatz (5) anzuzeigen, wobei Statusmeldungen über den Betriebszustand des Energieverteilungsnetzes (3,4,7,8,9,10,11,12) im Fokusbereich eingeblendet werden.

8. Kontrollanordnung nach Anspruch 7, **dadurch gekennzeichnet**, das elektrische Energieverteilungsnetz (3,4) ein Mittelspannungsnetz mit einer Nennspannung von 1 kV bis 52 kV aufweist.

9. Kontrollanordnung nach Anspruch 7 oder 8, **dadurch gekennzeichnet**, das elektrische Energieverteilungsnetz (3,4) ein Niederspannungsnetz mit einer Nennspannung von höchstens 1 kV aufweist.

10. Kontrollanordnung nach einem der vorhergehenden Ansprüche, **dadurch gekennzeichnet, dass** die Hintergrundkarte (30) Informationen über mindestens eines der folgenden geographischen Merkmale aufweist: Straßen, Häuser, Bahnlinien, Flüsse, Meere, Berge, Täler.

11. Kontrollanordnung nach einem der vorhergehenden Ansprüche, **dadurch gekennzeichnet, dass** die Ersatzschaltbilder Informationen über mindestens eines der folgenden Betriebsmittel aufweist: Ortsnetztransformator, regelbarer Ortsnetztransformator, Netzregler, Mittelspannungstransformator (9,18,19), Hochspannungstransformator (12,16), Schaltanlage.

12. Kontrollanordnung nach einem der vorhergehenden Ansprüche, **dadurch gekennzeichnet, dass** die Statusmeldungen Alarmmeldungen über unzulässige Betriebszustände aufweisen.

13. Comuterprogrammprodukt, umfassend Befehle, die bei der Ausführung des Programms durch einen Computer diesen veranlassen, das Verfahren nach einem der Ansprüche 1 bis 6 auszuführen.
